# FASCICULE DE BREVET EUROPEEN

(11) **EP 1 694 716 B1**
(45) Date de publication et mention de la délivrance du brevet: **07.05.2008**
(21) Numéro de dépôt: 04816565.8
(22) Date de dépôt: 16.12.2004
(51) Int. Cl.: C08F 2/32

(54) **MOUSSES POLYMERES A CELLULES OUVERTES DE TRES FAIBLE DIAMETRE ET LEUR PROCEDE DE FABRICATION**
OFFENZELLIGE POLYMERSCHAUMSTOFFE MIT SEHR KLEINEM DURCHMESSER UND HERSTELLUNGSVERFAHREN DAFÜR
OPEN CELL POLYMER FOAMS HAVING A VERY SMALL DIAMETER, AND THE PRODUCTION METHOD THEREOF

(30) Priorité: 19.12.2003 FR 0351136
(43) Date de publication de la demande: 30.08.2006
(73) Titulaire: COMMISSARIAT A L'ENERGIE ATOMIQUE, 75015 Paris (FR)
(72) Inventeur: COLLIER, Rémy, F-21000 DIJON (FR); VEDRENNE, Patrick, F-21000 DIJON (FR); PEREZ, Marc, F-21120 IS SUR TILLE (FR)
(74) Mandataire: Poulin, Gérard
(86) Numéro de dépôt international: PCT/FR2004/050712
(87) Numéro de publication internationale: WO 2005/061553

(56) Documents cités:
- WO-A-00/50502
- WO-A-01/27165
- US-A- 3 996 180
- US-A- 5 149 720

## Description

### DOMAINE TECHNIQUE

La présente invention se rapporte à des mousses polymères à cellules ouvertes de très faible diamètre, ainsi qu'à leur procédé de fabrication.

Les mousses selon l'invention sont des mousses « polyHIPE » - c'est-à-dire des mousses obtenues par polymérisation d'une émulsion à phase interne hautement concentrée - et ont pour caractéristique de présenter, non seulement des cellules ouvertes de très faible diamètre, mais également une basse densité et un très haut degré de pureté.

Elles sont donc particulièrement utiles pour la réalisation d'expériences dans le domaine de la physique des plasmas, et notamment comme cibles pour l'étude des phénomènes de fusion par confinement inertiel, mais également en tant que matériaux destinés à absorber une énergie (isolation thermique, phonique, mécanique, ...) ou des liquides, matériaux de filtration et de séparation de substances, supports d'imprégnation et/ou de libération contrôlée de substances (support de catalyseurs, support de principes actifs médicamenteux, ...) ou encore en tant que matériaux de remplissage de structures dont on souhaite alléger le poids.

### ETAT DE LA TECHNIQUE ANTERIEURE

Les mousses « polyHIPE » **(Poly**merised **H**igh **I**nternal **P**hase **E**mulsion) sont des mousses polymères qui sont obtenues par polymérisation d'une émulsion composée, d'une part, d'une phase organique, dispersante, qui contient des monomères polymérisables et un agent tensio-actif en solution dans un solvant, et, d'autre part, d'une phase aqueuse, dispersée, qui représente au moins 74% du volume total de l'émulsion et qui renferme un initiateur de polymérisation desdits monomères.

Après élimination de l'eau présente dans le produit résultant de cette polymérisation, on obtient des mousses à cellules ouvertes qui correspondent à l'empreinte des bulles d'eau s'étant formées dans l'émulsion au cours de sa préparation et qui sont interconnectées par des ouvertures de plus petite taille qu'elles, communément désignées sous le terme de pores.

Ces mousses présentent un rapport volume vide/volume plein élevé et, donc, une basse densité, ainsi qu'une structure cellulaire isotropique, sphérique et régulière les rend très différentes des mousses polymères classiquement obtenues par soufflage ou extrusion qui se caractérisent par une structure cellulaire anisotropique, orientée et irrégulière.

Compte tenu de leurs caractéristiques, les mousses polyHIPE sont l'objet d'un intérêt croissant et leur utilisation a été proposée dans de nombreux domaines dont notamment la fabrication d'articles absorbants jetables (US-A-5,331,015 **[1]**), d'articles isolants (US-A-5,770,634 **[2]**) et de membranes et de dispositifs de filtration (WO-A-97/37745 **[3]**).

Afin d'élargir encore leur potentiel d'applications, les Inventeurs se sont fixés pour but de fournir des mousses polyHIPE qui présentent des cellules d'un diamètre le plus faible possible tout en conservant une basse densité.

Ils se sont, de plus, fixés pour but de fournir des mousses polyHIPE qui aient, outre les propriétés précitées, celles de présenter un très haut degré de pureté et d'être réalisables par un procédé simple à mettre en oeuvre et économiquement compatible avec une fabrication à une échelle industrielle.

### EXPOSÉ DE L'INVENTION

Ces buts, et d'autres encore, sont atteints par la présente invention qui propose une mousse polyHiPE formée d'un polymère réticulé exclusivement hydrocarboné, à base de monomères styréniques, et qui présente une densité de 40 à 260 mg/cm³ ainsi que des cellules d'un diamètre moyen inférieur ou égal à 10 micromètres.

Selon une première disposition avantageuse de l'invention, le polymère est un copolymère de styrène et de divinylbenzène.

Ce copolymère peut notamment être obtenu à partir de monomères de styrène et de divinylbenzène commercialement disponibles, auquel cas le divinylbenzène est constitué d'un mélange des trois formes isomériques ortho, méta et para avec une prédominance de la forme méta.

Avantageusement, dans ce copolymère, le rapport massique du styrène au divinylbenzène est compris entre 5 et 1, et est, de préférence, égal à 4 ou sensiblement égal à 4.

Conformément à l'invention, la mousse présente, préférentiellement, des cellules d'un diamètre moyen compris entre 1 et 5 micromètres.

Selon une autre disposition avantageuse de l'invention, la mousse présente un taux massique d'impuretés inférieur à 3%, voire à 2%, c'est-à-dire que les éléments présents dans cette mousse autres que le carbone et l'hydrogène constitutifs du polymère, représentent moins de 3%, voire moins de 2%, en masse de la masse de ladite mousse.

Une mousse conforme à l'invention peut notamment être obtenue en introduisant, dans un procédé conventionnel de polymérisation en émulsion à phase interne hautement concentrée, une étape additionnelle qui consiste à soumettre l'émulsion à un cisaillement pour réduire le diamètre des bulles d'eau qu'elle renferme, avant de procéder à la polymérisation.

Aussi, l'invention a-t-elle également pour objet un procédé de fabrication d'une mousse polyHIPE telle que précédemment définie, qui comprend les étapes suivantes :
a) réaliser une émulsion entre une phase organique comprenant des monomères styréniques exclusivement hydrocarbonés et un agent tensio-actif, et une phase aqueuse comprenant un électrolyte et un initiateur de polymérisation, le volume de la phase aqueuse représentant au moins 74% du volume total des deux phases ;
b) soumettre l'émulsion à un cisaillement pour réduire le diamètre des bulles d'eau qu'elle renferme ;
c) polymériser lesdits monomères jusqu'à l'obtention d'une mousse solide ; et
d) laver la mousse ainsi obtenue et la sécher.

Selon une disposition avantageuse de ce procédé, les monomères styréniques présents dans la phase organique sont des monomères de styrène et de divinylbenzène, dans un rapport massique compris entre 5 et 1, qui représentent, de préférence, de 50 à 80% en poids du poids de la phase organique.

Selon une autre disposition avantageuse de ce procédé, l'agent tensio-actif présent dans la phase organique est du monooléate de diglycéryle, de balance hydrophile/lipophile de 5,5, les Inventeurs ayant, en effet, constaté que l'utilisation de cet agent tensio-actif permet de réduire encore le diamètre des bulles d'eau présentes dans l'émulsion et, partant, le diamètre des cellules des mousses obtenues.

Toutefois, d'autres agents tensio-actifs peuvent également être utilisés comme, par exemple, le monooléate de sorbitan ou le monostéarate de diglycéryle.

Dans tous les cas, l'agent tensio-actif représente, de préférence, de 13 à 20% en masse de la masse de cette phase organique.

L'électrolyte présent dans la phase aqueuse, dont le rôle est de stabiliser l'émulsion en modifiant les propriétés de l'agent tensio-actif, est avantageusement du sulfate d'aluminium et représente, de préférence, de 0,05 à 2% en masse de la masse de cette phase aqueuse. Toutefois, cet électrolyte peut aussi être choisi parmi différents autres sels, par exemple d'aluminium, de cuivre ou de sodium.

L'initiateur de polymérisation est, lui, avantageusement du persulfate de sodium et représente préférentiellement de 0,1 à 2% en masse de la masse de la phase aqueuse.

Par ailleurs, on préfère utiliser, dans la phase aqueuse, de l'eau ultrapure, notamment une eau de résistivité proche ou égale à 18,2 mégaohms (MΩ), obtenue, par exemple, par nanofiltration, ultrafiltration, échange ionique ou par distillation, le niveau de pureté de l'eau utilisée ayant, en effet, une influence, sur la pureté de la mousse obtenue.

Conformément à l'invention, l'émulsion entre la phase organique et la phase aqueuse est réalisée, par exemple dans un réacteur muni d'un arbre d'agitation, en ajoutant, progressivement et sous agitation modérée, la phase aqueuse à la phase organique déjà présente dans le réacteur, puis en soumettant l'ensemble à une agitation plus vive, correspondant par exemple à une vitesse de rotation de l'arbre de 300 tours/min, jusqu'à obtention d'une émulsion stable. Une émulsion stable est généralement obtenue en maintenant l'agitation pendant 60 à 90 minutes.

L'émulsion ainsi obtenue est ensuite soumise à un cisaillement pour réduire le diamètre des bulles d'eau qu'elle renferme. Ceci peut notamment être réalisé en injectant l'émulsion dans un récipient, avantageusement un moule de forme et de dimensions correspondant à celles de la mousse que l'on souhaite fabriquer, au moyen d'une seringue reliée à un pulseur apte à délivrer une pression supérieure à la pression atmosphérique. Cette seringue est avantageusement munie, à son extrémité inférieure, d'un robinet pour son remplissage par l'émulsion, puis d'une aiguille, par exemple métallique, pour l'injection de ladite émulsion. On utilise, de préférence, une aiguille présentant un diamètre interne de 150 µm à 1 mm.

La polymérisation des monomères est alors réalisée, de préférence, à chaud, c'est-à-dire à une température de l'ordre de 30 à 70°C, par exemple dans une étuve. Elle peut être conduite après avoir placé l'émulsion dans un récipient hermétiquement fermé afin d'éviter une éventuelle contamination de cette émulsion au cours de la polymérisation. Le temps nécessaire pour que la polymérisation de l'émulsion conduise à une mousse solide est généralement de l'ordre de 12 à 48 heures.

Selon une autre disposition avantageuse de l'invention, le lavage de la mousse comprend une ou plusieurs opérations de trempage de cette mousse dans de l'eau, de préférence, ultrapure, suivies d'une ou plusieurs opérations de trempage dans un alcool, elles-mêmes suivies d'une ou plusieurs opérations d'extraction par un alcool, par exemple dans un extracteur Soxhlet.

L'alcool utilisé au cours de ces opérations est, de préférence, l'éthanol.

Conformément à l'invention, le séchage de la mousse est, de préférence, réalisé dans une étuve, à une température de l'ordre de 60°C, par exemple pendant une douzaine d'heures.

D'autres caractéristiques et avantages de l'invention apparaîtront mieux à la lecture du complément de description qui suit, qui est donnée bien entendu à titre illustratif et non-limitatif, et en référence aux dessins annexés.

### BRÈVE DESCRIPTION DES DESSINS

La figure 1 représente trois photographies prises au microscope électronique à balayage sur un échantillon d'un premier exemple de mousse conforme à l'invention, la partie A correspondant à un grossissement de X28, la partie B à un grossissement de X127 et la partie C à un grossissement de X1960.

La figure 2 représente, sous forme d'un histogramme, la fréquence (F) des cellules d'un échantillon du premier exemple de mousse illustré sur la figure 1 en fonction du diamètre (D) de ces cellules, exprimé en micromètres.

La figure 3 représente, sous forme d'un histogramme, la fréquence (F) des pores d'un échantillon du premier exemple de mousse illustré sur la figure 1 en fonction du diamètre (D) de ces pores, exprimé en micromètres.

La figure 4 représente trois photographies prises au microscope électronique à balayage sur un échantillon d'un deuxième exemple de mousse conforme à l'invention, la partie A correspondant à un grossissement de X32,3, la partie B à un grossissement de X126 et la partie C à un grossissement de X1990.

La figure 5 représente, sous forme d'un histogramme, la fréquence (F) des cellules d'un échantillon du deuxième exemple de mousse illustré sur la figure 4 en fonction du diamètre (D) de ces cellules, exprimé en micromètres.

La figure 6 représente, sous forme d'un histogramme, la fréquence (F) des pores d'un échantillon du deuxième exemple de mousse illustré sur la figure 4 en fonction du diamètre (D) de ces pores, exprimé en micromètres.

La figure 7 représente trois photographies prises au microscope électronique à balayage sur un échantillon d'un troisième exemple de mousse conforme à l'invention, la partie A correspondant à un grossissement de X30,9, la partie B à un grossissement de X129 et la partie C à un grossissement de X1940.

La figure 8 représente, sous forme d'un histogramme, la fréquence (F) des cellules d'un échantillon du troisième exemple de mousse illustré sur la figure 7 en fonction du diamètre (D) de ces cellules, exprimé en micromètres.

La figure 9 représente, sous forme d'un histogramme, la fréquence (F) des pores d'un échantillon du troisième exemple de mousse illustré sur la figure 7 en fonction du diamètre (D) de ces pores, exprimé en micromètres.

### EXPOSÉ DETAILLE DE MODES DE REALISATION PARTICULIERS

### Exemple 1 :

On réalise un lot d'échantillons d'un premier exemple de mousse polymère conforme à l'invention en suivant le protocole opératoire ci-après.

Dans un premier temps, on prépare une phase organique comprenant 12,9 g de styrène (Société Aldrich), 3,2 g de divinylbenzène (Société Aldrich) et 4 g de monooléate de diglycéryle (DCMO-CV de la société NIKKOL).

On introduit cette phase organique dans la cuve d'un réacteur de chimie en verre à double enveloppe dans laquelle circule un fluide caloporteur, en l'espèce de l'eau maintenue à 20°C par un bain thermostaté. Le réacteur est refermé par un couvercle étanche percé de 4 rodages dont un rodage central permet le passage d'un arbre d'agitation et deux rodages latéraux servent à connecter le réacteur respectivement à l'extrémité d'une ampoule de coulée isobare et à une pompe à vide.

On prépare parallèlement une phase aqueuse comprenant 0,2 g de sulfate d'aluminium (société Aldrich) et 0,6 g de persulfate de sodium (société Aldrich) dans 299,2 ml d'eau ultrapure, de résistivité égale à 18,2 MΩ.

Cette phase aqueuse est introduite dans la cuve du réacteur par l'intermédiaire de l'ampoule de coulée isobare et la vitesse de rotation de l'arbre d'agitation est portée à 300 tours/min en 30 secondes. Cette agitation est maintenue pendant 70 minutes, puis le réacteur est placé sous vide partiel (109 mbars) à l'aide de la pompe à vide. L'agitation est encore poursuivie pendant 5 minutes, puis stoppée et le vide est cassé après 4 minutes de repos.

L'émulsion ainsi formée dans le réacteur est chargée dans une seringue, d'une contenance de 300 ml, qui est obturée à son extrémité inférieure par un robinet et qui est reliée à un pulseur TECHCO, modèle TDS-983D, apte à délivrer une pression pouvant atteindre 7 bars. Ce chargement une fois effectué, le robinet de la seringue est remplacé par une aiguille métallique, de diamètre interne de 410 µm, et l'émulsion est injectée dans une série de tubes en verre sous une pression de 4 bars.

Les tubes sont ensuite introduits dans des sacs plastiques contenant 1 cm³ d'eau ultrapure. Les sacs sont fermés par soudure et placés dans une étuve à 60°C pendant 17 heures au terme desquelles les tubes sont retirés de l'étuve et laissés à refroidir jusqu'à ce que leur température soit égale à la température ambiante.

Les échantillons de mousse contenus dans les tubes en verre en sont extraits manuellement puis placés dans un bécher rempli d'eau ultrapure. Quatre jours plus tard, les échantillons sont placés dans un autre bécher rempli d'éthanol. Ils y séjournent pendant 2 jours, puis ils sont placés dans un extracteur Soxhlet dont on remplit le ballon d'éthanol. le chauffe-ballon est porté à 92°C. L'évaporation, puis la condensation de l'éthanol assurent une circulation de ce solvant dans les échantillons de mousse pendant 24 heures. L'éthanol du ballon est renouvelé une fois et le processus d'extraction est relancé pour 24 heures.

Au terme de cette opération, les échantillons de mousse sont séchés dans une étuve à 60°C pendant 12 heures.

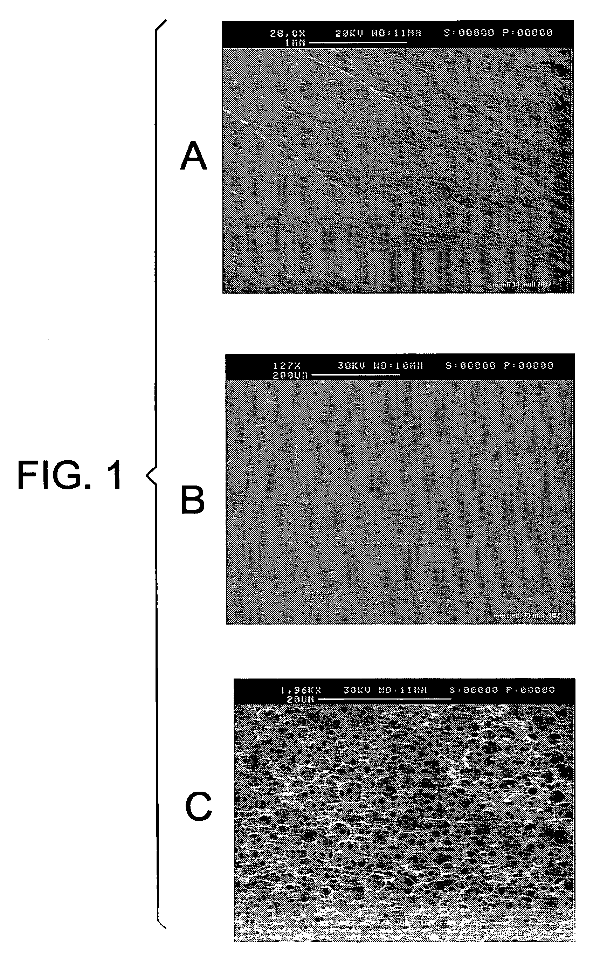

Les échantillons de mousse ainsi réalisés se caractérisent par :
* une densité moyenne de 48, 6 mg/cm³ ± 0,1 mg/cm³,
* une structure très homogène, comme le montre la figure 1 qui représente trois photographies prises au microscope électronique à balayage, respectivement à un grossissement de X28 (partie A), X127 (partie B) et X1960 (partie C), sur un échantillon de mousse,
* un diamètre moyen de cellules de 2,64 µm ± 0,46 µm,
* un diamètre moyen de pores de 0,58 µm ± 0,31 µm, et
* un taux massique d'impuretés (éléments autres que le carbone et l'hydrogène) égal à 1,26% (pourcentages massique O = 1,12 ; Na = 0,0752 ; Al = 0,064).

La densité a été déterminée en soumettant 25 deux échantillons pris au hasard, d'une part, à une mesure dimensionnelle au moyen d'un pied à coulisse numérique (incertitude de mesure : ± 10 µm), et, d'autre part, à une pesée (incertitude de mesure : 10 µg).

Les diamètres moyens des cellules et des pores ont, eux, été déterminés sur respectivement 57 cellules et 422 pores au moyen d'un logiciel d'analyse d'images à partir d'images obtenues par microscopie électronique à balayage.

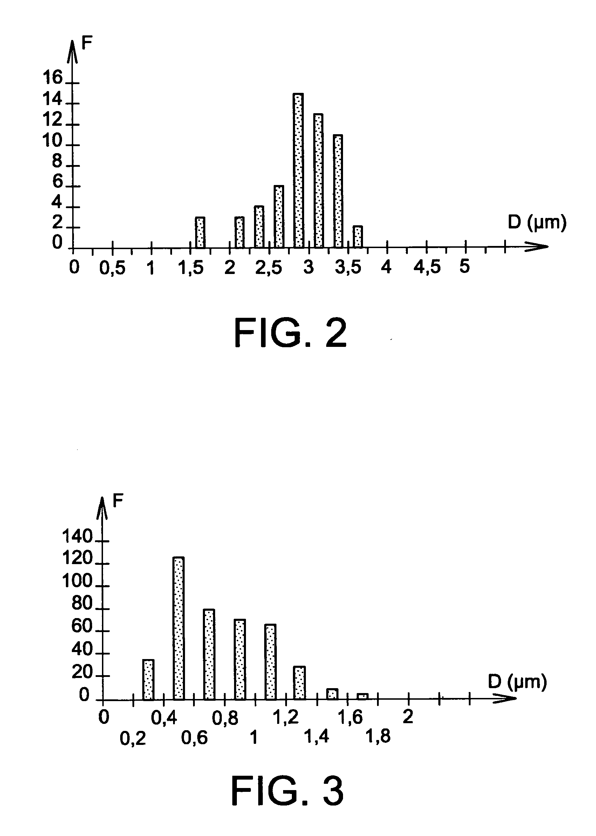

La figure 2 illustre, sous la forme d'un histogramme, la fréquence (F) de ces cellules en fonction de leur diamètre (D), exprimé en µm, tandis que la figure 3 illustre, également sous la forme d'un histogramme, la fréquence (F) de ces pores en fonction de leur diamètre (D), exprimé en µm.

### Exemple 2 :

On réalise un lot d'échantillons d'un deuxième exemple de mousse polymère conforme à l'invention en suivant un protocole opératoire identique à celui décrit dans l'exemple 1, mais en utilisant une phase organique comprenant 42 g de styrène, 10,5 g de divinylbenzène et 7,9 g de monooléate de diglycéryle, et une phase aqueuse comprenant 0,2 g de sulfate d'aluminium et 0,5 g de persulfate de sodium dans 293 ml d'eau ultrapure.

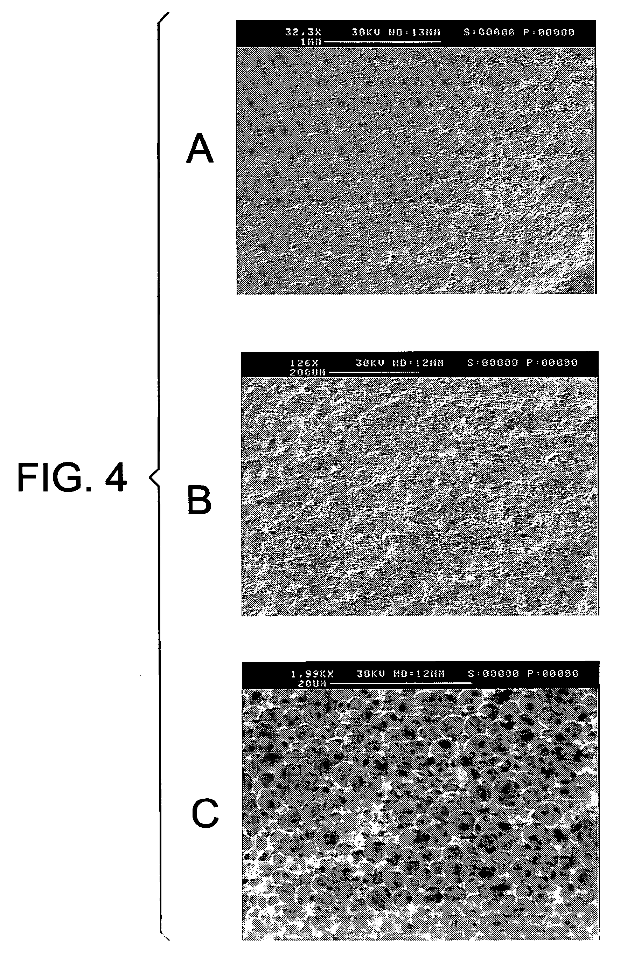

On obtient ainsi des échantillons qui, soumis à des analyses analogues à celles décrites dans l'exemple 1, se caractérisent par
* une densité moyenne de 159,0 mg/cm³ ± 0,1 mg/cm³,
* une structure très homogène, comme le montre la figure 4 qui représente trois photographies prises au microscope électronique à balayage, respectivement à un grossissement de X32,3 (partie A), X126 (partie B) et X1990 (partie C), sur un échantillon de mousse,
* un diamètre moyen de cellules de 2,97 µm ± 0,63 µm (déterminé sur 57 cellules),
* un diamètre moyen de pores de 0,75 µm ± 0,31 µm (déterminé sur 151 pores), et
* un taux massique d'impuretés (éléments autres que le carbone et l'hydrogène) égal à 1,16% (pourcentages massiques : O = 1,09 ; S = 0,029, Na = 0,0287 ; Al = 0,0189).

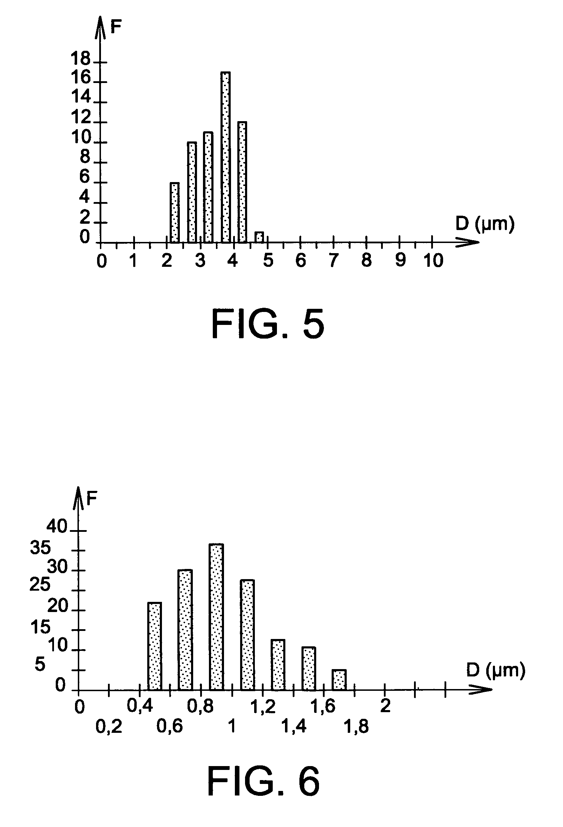

La figure 5 illustre, sous la forme d'un histogramme, la fréquence (F) de ces cellules en fonction de leur diamètre (D), exprimé en µm, tandis que la figure 6 illustre, également sous la forme d'un histogramme, la fréquence (F) de ces pores en fonction de leur diamètre (D) exprimé en µm.

### Exemple 3 :

On réalise un lot d'échantillons d'un troisième exemple de mousse polymère conforme à l'invention en suivant un protocole opératoire identique à celui décrit dans l'exemple 1, mais en utilisant une phase organique comprenant 70 g de styrène, 17,5 g de divinylbenzène et 13,1 g de monooléate de diglycéryle, et une phase aqueuse comprenant 0,18 g de sulfate d'aluminium et 0,467 g de persulfate de sodium dans 254 ml d'eau ultrapure.

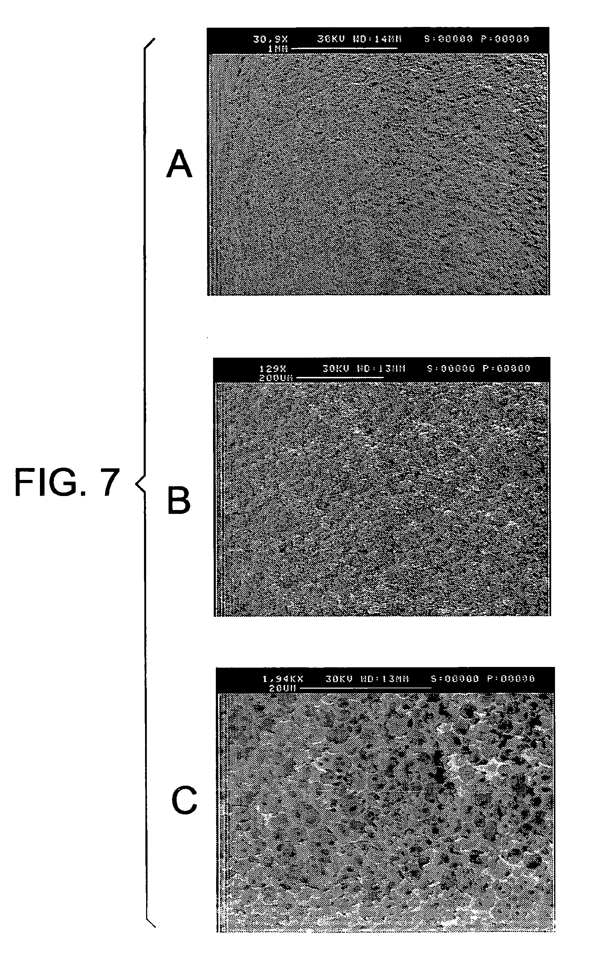

On obtient ainsi des échantillons qui, soumis à des analyses analogues à celles décrites dans l'exemple 1, se caractérisent par :
* une densité moyenne de 256,8 mg/cm³ ± 0,1 mg/cm³,
* une structure très homogène, comme le montre la figure 7 qui représente trois photographies prises au microscope électronique à balayage, respectivement à un grossissement de X30,9 (partie A), X129 (partie B) et X1940 (partie C), sur un échantillon de mousse,
* un diamètre moyen de cellules de 2,93 µm ± 0,74 µm (déterminé sur 41 cellules),
* un diamètre moyen de pores de 0,70 µm ± 0,26 µm (déterminé sur 106 pores), et
* un taux massique d'impuretés (éléments autres que le carbone et l'hydrogène) égal à 1,29% (pourcentages massiques : O = 1,24 ; S = 0,037, Na = 0,0074 ; Al = 0,0077).

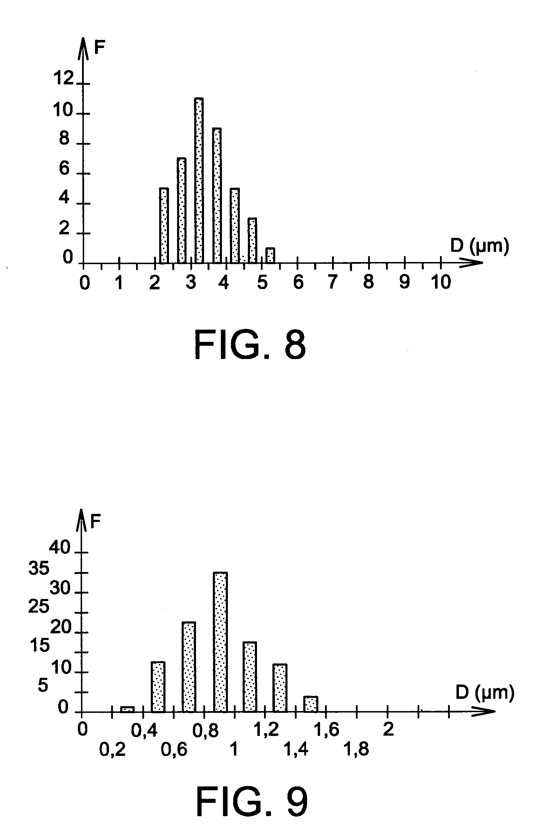

La figure 8 illustre, sous la forme d'un histogramme, la fréquence (F) de ces cellules en fonction de leur diamètre (D), exprimé en µm, tandis que la figure 9 illustre, également sous la forme d'un histogramme, la fréquence (F) de ces pores en fonction de leur diamètre (D), exprimé en µm.

## Revendications

1. Mousse polymère obtenue par polymérisation en émulsion à phase interne hautement concentrée, qui est formée d'un polymère réticulé exclusivement hydrocarboné, à base de monomères styréniques, et qui présente une densité de 40 mg/cm³ à 260 mg/cm³ ainsi que des cellules d'un diamètre moyen inférieur ou égal à 10 micromètres.

2. Mousse polymère selon la revendication 1, dans laquelle le polymère est un copolymère de styrène et de divinylbenzène.

3. Mousse polymère selon la revendication 2 ou la revendication 3, dans laquelle le rapport massique du styrène au divinylbenzène est compris entre 5 et 1.

4. Mousse polymère selon l'une quelconque des revendications précédentes, qui présente un diamètre moyen de cellules compris entre 1 et 5 micromètres.

5. Mousse polymère selon l'une quelconque des revendications précédentes, dans laquelle les éléments autres que le carbone et l'hydrogène constitutifs du polymère représentent moins de 3% en masse de la masse de la mousse.

6. Procédé de fabrication d'une mousse polymère selon l'une quelconque des revendications 1 à 5, qui comprend les étapes suivantes :
a) réaliser une émulsion entre une phase organique comprenant des monomères styréniques exclusivement hydrocarbonés et un agent tensio-actif, et une phase aqueuse comprenant un électrolyte et un initiateur de polymérisation, le volume de la phase aqueuse représentant au moins 74% du volume total des deux phases ;
b) soumettre l'émulsion à un cisaillement pour réduire le diamètre des bulles d'eau qu'elle renferme ;
c) polymériser lesdits monomères jusqu'à l'obtention d'une mousse solide ;
d) laver la mousse obtenue à l'étape c) et la sécher.

7. Procédé selon la revendication 6, dans lequel les monomères styréniques présents dans la phase organique sont des monomères de styrène et de divinylbenzène.

8. Procédé selon la revendication 7, dans lequel le rapport massique des monomères du styrène aux monomères du divinylbenzène est compris entre 5 et 1.

9. Procédé selon l'une quelconque des revendications 6 à 8, dans lequel les monomères styréniques représentent de 50 à 80% en masse de la masse de la phase organique.

10. Procédé selon l'une quelconque des revendications 6 à 9, dans lequel l'agent tensio-actif est du monooléate de diglycéryle.

11. Procédé selon l'une quelconque des revendications 6 à 10, dans lequel l'agent tensio-actif représente de 13 à 20% en masse de la masse de la phase organique.

12. Procédé selon l'une quelconque des revendications 6 à 11, dans lequel l'électrolyte est du sulfate d'aluminium.

13. Procédé selon l'une quelconque des revendications 6 à 12, dans lequel l'électrolyte représente de 0,05 à 2% en masse de la masse de la phase aqueuse.

14. Procédé selon l'une quelconque des revendications 6 à 13, dans lequel l'initiateur de polymérisation est du persulfate de sodium.

15. Procédé selon l'une quelconque des revendications 6 à 14, dans lequel l'initiateur de polymérisation représente de 0,1 à 2% en masse de la masse de la phase aqueuse.

16. Procédé selon l'une quelconque des revendications 6 à 15, dans lequel l'eau utilisée pour préparer la phase aqueuse est de l'eau présentant une résistivité d'environ 18,2 mégaohms.

17. Procédé selon l'une quelconque des revendications 6 à 16, dans lequel l'étape b) est réalisée en injectant l'émulsion dans un récipient au moyen d'une seringue reliée à un pulseur apte à délivrer une pression supérieure à la pression atmosphérique.

18. Procédé selon la revendication 17, dans lequel le récipient est un moule ayant la forme et les dimensions de la mousse devant être fabriquée.

19. Procédé selon la revendication 17 ou la revendication 18, dans lequel la seringue est munie d'une aiguille présentant un diamètre interne de 150 µm à 1 mm.

20. Procédé selon l'une quelconque des revendications 6 à 19, dans lequel la polymérisation des monomères est réalisée à une température de l'ordre de 30 à 70°C.

21. Procédé selon l'une quelconque des revendications 6 à 20, dans lequel le lavage de la mousse comprend une ou plusieurs opérations de trempage de cette mousse dans de l'eau, suivies d'une ou plusieurs opérations de trempage dans un alcool, elles-mêmes suivies d'une ou plusieurs opérations d'extraction par un alcool.

22. Procédé selon l'une quelconque des revendications 6 à 21, dans lequel la mousse est séchée dans une étuve à une température d'environ 60°C.

## Claims

1. A polymer foam obtained by highly concentrated internal phase emulsion polymerization, which is formed from a crosslinked, exclusively hydrocarbon, polymer based on styrenic monomers, and has a density of 40 mg/cm³ to 260 mg/cm³ and cells witch a mean diameter of 10 micrometers or less.

2. The polymer foam as claimed in claim 1, in which the polymer is a styrene/divinylbenzene copolymer.

3. The polymer foam as claimed in claim 2, in which the styrene/divinylbenzene weight ratio is between 5 and 1.

4. The polymer foam as claimed in any one of the preceding claims, which has a mean cell diameter of between 1 and 5 micrometers.

5. The polymer foam as claimed in any one of the preceding claims, in which the elements other than the constituent carbon and the constituent hydrogen of the polymer represent less than 3% by weight of the weight of the foam.

6. A process for the manufacture of a polymer foam as claimed in any one of claims 1 to 5, which comprise the following steps:
a) an emulsion between an organic phase, comprising exclusively hydrocarbon styrenic monomers and a surfactant, and an aqueous phase, comprising an electrolyte and a polymerization initiator, is produced, the volume of the aqueous phase representing at least 74% of the total volume of the two phases;
b) the emulsion is subjected to shear in order to reduce the diameter of the water bubbles that it contains;
c) said monomers are polymerized until a solid foam is obtained; and
d) the foam obtained in step c) is washed and dried.

7. The process as claimed in claim 6, in which the styrenic monomers present in the organic phase are styrene and divinylbenzene monomers.

8. The process as claimed in claim 7, in which the weight ratio of the styrene monomers to the divinylbenzene monomers is between 5 and 1.

9. The process as claimed in any one of claims 6 to 8, in which the styrenic monomers represent from 50 to 80% by weight of the weight of the organic phase.

10. The process as claimed in any one of claims 6 to 9, in which the surfactant is diglyceryl monooleate.

11. The process as claimed in any one of claims 6 to 10, in which the surfactant represents from 13 to 20% by weight of the weight of the organic phase.

12. The process as claimed in any one of claims 6 to 11, in which the electrolyte is aluminum sulfate.

13. The process as claimed in any one of claims 6 to 12, in which the electrolyte represents from 0.05 to 2% by weight of the weight of the aqueous phase.

14. The process as claimed in any one of claims 6 to 13, in which the polymerization initiator is sodium persulfate.

15. The process as claimed in any one of claims 6 to 14, in which the polymerization initiator represents from 0.1 to 2% by weight of the weight of the aqueous phase.

16. The process as claimed in any one of claims 6 to 15, in which the water used for preparing the aqueous phase is water having a resistivity of about 18.2 megaohms.

17. The process as claimed in any one of claims 6 to 16, in which step b) is carried out by injecting the emulsion into a container by means of a syringe connected to a pulser capable of delivering a pressure above atmospheric pressure.

18. The process as claimed in claim 17, in which the container is a mold having the shape and the dimensions of the foam that has to be manufactured.

19. The process as claimed in claim 17 or claim 18, in which the syringe is provided with a needle having an internal diameter of 150 µm to 1 mm.

20. The process as claimed in any one of claims 6 to 19, in which the polymerization of the monomers is carried out at a temperature of around 30 to 70°C.

21. The process as claimed in any one of claims 6 to 20, in which the washing of the foam comprises one or more operations of immersing this foam in water, followed by one or more operations of immersing it in an alcohol, which are themselves followed by one or more alcohol extraction operations.

22. The process as claimed in any one of claims 6 to 21, in which the foam is dried in an oven at a temperature of about 60°C.

## Patentansprüche

1. Polymerschaumstoff erhalten durch Emulsionspolymerisation in hochkonzentrierter innerer Phase, der aus einem vernetzten Polymer aus ausschließlich Kohlenwasserstoff auf der Grundlage von Styrolmonomeren gebildet ist und der eine Dichte von 40 mg/cm³ bis 260 mg/cm³ sowie Zellen mit einem mittleren Durchmesser unter oder gleich 10 Mikrometer aufweist.

2. Polymerschaumstoff gemäß Anspruch 1, bei dem das Polymer ein Copolymer aus Styrol und Divinylbenzol ist.

3. Polymerschaumstoff gemäß Anspruch 2 oder Anspruch 3, bei dem das Gewichtsverhältnis von Styrol zu Divinylbenzol zwischen 5 und 1 beträgt.

4. Polymerschaumstoff gemäß einem der vorangehenden Ansprüche, der einen mittleren Zelldurchmesser aufweist, der zwischen 1 und 5 Mikrometer beträgt.

5. Polymerschaumstoff gemäß einem der vorangehenden Ansprüche, bei dem die anderen Elemente als der das Polymer bildende Kohlenstoff und Wasserstoff weniger als 3 Ges.-% des Schaumstoffgewichts darstellen.

6. Verfahren zur Herstellung eines Polymerschaumstoffs gemäß einem der Ansprüche 1 bis 5, das die folgenden Stufen umfasst:
a) Herstellen einer Emulsion aus einer organischen Phase, die Styrolmonomere aus ausschließlich Kohlenwasserstoff und ein Tensid umfasst, und einer wässrigen Phase, die einen Elektrolyten und einen Polymerisationsinitiator umfasst, wobei das Volumen der wässrigen Phase mindestens 74 % des Gesamtvolumens der beiden Phasen darstellt;
b) Unterziehen der Emulsion einer Scherung zum Verringern des Durchmessers der von ihr eingeschlossenen Wasserblasen;
c) Polymerisieren der Monomeren bis zum Erhalt eines festen Schaumstoffs;
d) Waschen und Trocknen des in Schritt c) erhaltenen Schaumstoffs.

7. Verfahren gemäß Anspruch 6, bei dem die in der organischen Phase vorhandenen Styrolmonomeren Styrol- und Divinylbenzolmonomeren sind.

8. Verfahren gemäß Anspruch 7, bei dem das Gewichtsverhältnis der Styrolmonomeren zu den Divinylbenzolmonomeren zwischen 5 und 1 beträgt.

9. Verfahren gemäß einem der Ansprüche 6 bis 8, bei dem die Styrolmonomeren 50 bis 80 Gew.-% des Gewichts der organischen Phase darstellen.

10. Verfahren gemäß einem der Ansprüche 6 bis 9, bei dem das Tensid Diglycerylmonooleat ist.

11. Verfahren gemäß einem der Ansprüche 6 bis 10, bei dem das Tensid 13 bis 20 Ges.-% des Gewichts der organischen Phase darstellt.

12. Verfahren gemäß einem der Ansprüche 6 bis 11, bei dem der Elektrolyt Aluminiumsulfat ist.

13. Verfahren gemäß einem der Ansprüche 6 bis 12, bei dem der Elektrolyt 0,05 bis 2 Gew.-% des Gewichts der wässrigen Phase darstellt.

14. Verfahren gemäß einem der Ansprüche 6 bis 13, bei dem der Polymerisationsinitiator Natriumpersulfat ist.

15. Verfahren gemäß einem der Ansprüche 6 bis 14, bei dem der Polymerisationsinitiator 0.1 bis 2 Gew.-% des Gewichts der wässrigen Phase darstellt.

16. Verfahren gemäß einem der Ansprüche 6 bis 15, bei dem das zum Herstellen der wässrigen Phase verwendete Wasser einen spezifischen Widerstand von etwa 18,2 Megaohm aufweist.

17. Verfahren gemäß einem der Ansprüche 6 bis 16, bei dem Schritt b) durch Einspritzen der Emulsion in ein Gefäß mittels einer Spritze, die mit einem Pulsator verbunden ist, der einen Druck über dem Atmosphärendruck liefern kann, durchgeführt wird.

18. Verfahren gemäß Anspruch 17, bei dem das Gefäß eine Form ist, die die Form und die Abmessungen des herzustellenden Schaumstoffs aufweist.

19. Verfahren gemäß Anspruch 17 oder Anspruch 18, bei dem die Spritze mit einer Nadel ausgestattet ist, die einen lnnendurchmesser von 150 µm bis 1 mm aufweist.

20. Verfahren gemäß einem der Ansprüche 6 bis 19, bei dem die Polymerisation der Monomeren bei einer Temperatur in der Größenordnung von 30 bis 70 °C durchgeführt wird.

21. Verfahren gemäß einem der Ansprüche 6 bis 20, bei dem das Waschen des Schaumstoffs einen oder mehrere Arbeitsgänge des Tauchens dieses Schaumstoffs in Wasser, gefolgt von einem oder mehreren Arbeitsgängen des Tauchens in einen Alkohol umfasst, wobei diese von einem oder mehreren Arbeitsgängen einer Extraktion mit einem Alkohol gefolgt werden.

22. Verfahren gemäß einem der Ansprüche 6 bis 21, bei dem der Schaumstoff in einem Ofen bei einer Temperatur von etwa 60 °C getrocknet wird.
